# EUROPÄISCHE PATENTSCHRIFT

(11) **EP 1 763 414 B1**
(45) Veröffentlichungstag und Bekanntmachung des Hinweises auf die Patenterteilung: **27.02.2008**
(21) Anmeldenummer: 05750310.4
(22) Anmeldetag: 07.06.2005
(51) Int. Cl.: B22D 11/053

(54) **VORRICHTUNG FÜR DIE STÜTZUNG UND OSZILLATION EINER STRANGGIESSKOKILLE ZUM STRANGGIESSEN VON FLÜSSIGEN METALLEN, INSBESONDERE VON FLÜSSIGEN STAHLWERKSTOFFEN UND VERFAHREN ZUM MONTIEREN ODER DEMONTIEREN SOWIE INSTANDHALTEN**
DEVICE FOR SUPPORTING AN OSCILLATING A CONTINUOUS CASTING MOLD FOR CONTINUOUSLY CASTING MOLTEN METALS, PARTICULARLY MOLTEN METAL MATERIALS, AND METHOD FOR ASSEMBLING, DISASSEMBLING AND MAINTAINING THE DEVICE
DISPOSITIF DE SUPPORT ET DE MISE EN OSCILLATION D'UNE COQUILLE POUR LA COULEE CONTINUE DE METAUX LIQUIDES, EN PARTICULIER D'ACIERS LIQUIDES, ET SON PROCEDE DE MONTAGE

(30) Priorität: 06.07.2004 DE 102004032764; 26.04.2005 DE 102005019295
(43) Veröffentlichungstag der Anmeldung: 21.03.2007
(73) Patentinhaber: SMS Demag Aktiengesellschaft, 40237 Düsseldorf (DE)
(72) Erfinder: HOVESTÄDT, Erich, 46414 Rhede (DE); BECKER, Martin, 40629 Düsseldorf (DE); WEYER, Axel, 42349 Wuppertal (DE); STAVENOW, Axel, 40625 Düsseldorf (DE); HOFFMEISTER, Jörn, 47443 Moers (DE)
(74) Vertreter: Klüppel, Walter
(86) Internationale Anmeldenummer: PCT/EP2005/006097
(87) Internationale Veröffentlichungsnummer: WO 2006/002732

(56) Entgegenhaltungen:
- WO-A-99/62657
- CH-A- 377 053
- DE-A1- 1 433 048
- DE-A1- 10 131 715
- DE-A1- 10 244 596
- DE-A1- 19 541 164

## Beschreibung

Die Erfindung betrifft eine Vorrichtung für die Stützung und Oszillation einer Stranggießkokille zum Stranggießen von flüssigen Metallen, insbesondere von flüssigen Stahlwerkstoffen, mit auf beidseitig zur Gießstrang-Mittellängsachse symmetrisch angeordnete Führungselemente, ortsfeste Tragbauteile und auf paarweise Oszillations-Einrichtungen gestützter Stranggießkokille sowie Verfahren zum Demontieren, Montieren und Instandhalten von Baugruppen der Vorrichtung.

Stranggießkokillen mit den Kokillenhohlraum begrenzenden, gekühlten Seitenwänden, die von einer die Seitenwände stützenden Konstruktion umgeben sind, werden entweder auf einem Hubtisch abgestützt oder auf seitlich angeordneten separaten Aufnahmen gelagert. Die Aufnahmen ihrerseits sind auf einer Tragkonstruktion mit einer Oszillations-Einrichtung abgestützt. In Einzelfällen bilden die Aufnahme, die Tragkonstruktion und die Oszillationseinrichtung eine Baueinheit.

Die Montage oder Demontage dieser Baueinheiten offenbart den Nachteil, dass jeweils alle Bauelemente demontiert werden müssen, obwohl nur eines dieser Bauelemente oder Baugruppen schadhaft ist oder gewartet werden muss.

Das Dokument JP 073 28 748 A beschreibt bspw. eine Kokille, die über zwei seitliche Kragarme auf jeweils zugehörigen Oszillationszylindern abgestützt ist und über seitliche Rollen auf Führungsschienen geführt ist. Kokille, Oszillationszylinder und Führungseinrichtung sind auf einer gemeinsamen Platte angeordnet, die demontierbar ist.

Das Dokument DE 1 433 048 zeigt eine Hubvorrichtung für Kokillen mit zwei jeweils seitlich der abzustützenden Kokille angeordneten Hubtischen mit Kokillenträgern und Kokillenauflageflächen und mit einem gemeinsamen synchronisierten Oszillationsantrieb für die Kokillenträger.

Das Dokument CH 377 053 A beschreibt eine Kokille mit Kokillenhohlraum und einer die Kokillenplatten abstützenden gekühlten Stützkonstruktion. Die Stützkonstruktion mit Kokille ist auf zwei seitlich angeordneten Oszillationszylindern abgestützt. Die Oszillationzylinder sind zugleich die Träger der Kokille und Führungseinrichtungen, die in den Oszillationsrichtungen wirken. Die Oszillationsrichtung ist dabei mittig fluchtend zur Auflage der Kokillenstützkonstruktion. Die Oszillationszylinder sind an einer ortsfesten Tragkonstruktion angeordnet. Beim Lösen der Stützkonstruktion mit Kokille von den Trägern, kann der jeweilige Träger des Oszillationszylinders mit dem Zylinder als Führung und der ortsfesten Tragkonstruktion als eine Baueinheit vom Fundament demontiert oder montiert werden.

Aus dem Dokument DE 102 44 596 A1 ist ferner eine Anlage zum Stranggießen von Metallen, insbesondere von Stahlwerkstoffen, zu Langprodukten in einer Mehrstrang-gießanlage, mit mehreren Stranggießkokillen bekannt. Die Stranggießkokillen sind jeweils getrennt in einem in Gießrichtung oszillierend antreibbaren Schwingrahmen gelagert, der mittels beidseitig zur Gießader angeordneten Blattfeder-Paaren, die sich quer zur Gießrichtung erstrecken, zur Führung und Gewichtskompensation auf einem Fundamentrahmen gelagert ist. Hierbei sind auf einem länglichen Fundament-rahmen in Stranglaufrichtung zwei hintereinander angeordnete, in Form von kompakten Flachkästen ausgebildete Gehäuse befestigt, in denen obere und untere Blattfeder-Paare quer zur Gießader verlaufen, wobei an den Blattfeder-Paaren Oszillationsantriebe angreifen, und ein vorderer Oszillationsantrieb zum hinteren Oszillationsantrieb synchronisiert arbeitet.

Ausgehend von diesem Stand der Technik liegt der Erfindung die Auftrage zugrunde, eine bekannte Vorrichtung für die Stützung und Oszillation einer Stranggießkokille sowie ein bekanntes Verfahren zur Montage und Demontage der Vorrichtung dahingehend weiterzubilden, dass der Ausbau der Oszillations-Einrichtung für Vorrichtungen der genannten Art bei denen die Oszillations-Einrichtung in der ortsfesten Unterbaugruppe angeordnet ist, vereinfacht wird.

Diese Aufgabe wird durch den Gegenstand des Anspruchs 1 gelöst.

Diese Lösung sieht vor, dass eine für sich gemeinsam ausbaufähige Baugruppe aus paarweisen Lagerblöcken mit Führungselementen und einem mit den Lagerblöcken verbundenen Trägerkasten gebildet ist, die auf einer ortsfesten Unterbaugruppe aufgesetzt und lösbar mit dieser verbunden ist. Die Oszillations-Einrichtung ist in der ortsfesten Unterbaugruppe leicht zugänglich integriert. Damit ist vorteilhafterweise ein separater Ausbau der Baugruppe unabhängig von der Oszillationseinrichtung leicht möglich. Diese Separierung trägt auch der Tatsache Rechnung, dass die Verschleißteile der Kokillentragplatte zusammen mit den zugehörigen Führungselementen einen zeitlich häufigeren Wechsel als die zugehörige Oszillationseinrichtung erfordern. Durch die Erfindung wird vorteilhafterweise eine Demontage oder Montage der Oszillations-Einrichtung (Ventile, Steuermittel und Hydraulikzylinder) separat möglich. Die Notwendigkeit die ortsfeste Tragkonstruktion, die Träger mit den zugehörigen Führungselementen (wie bspw. Exzenter, Hebel oder Biegefedern) zu demontieren und später beim Einbau wieder neu ausrichten zu müssen wie dies bis her erforderlich war, entfällt.

Eine Ausgestaltung besteht darin, dass die Lagerblöcke aus einteiligen Wandträgem bestehen, die mit dem Trägerkasten verbunden sind.

Dieser Vorschlag ist dahingehend weiter ausgestaltet, dass der Wandträger Ausnehmungen für den Zugang zur Kokillenseite aufweist. Der Vorteil ist ein einfacher Zugang zu Kühlelementen der Stranggießkokille und deren Anschlüsse.

Die vorstehend beschriebenen Vorschläge sind noch dadurch verbessert, dass die Unterbaugruppe aus einer Zwischenplatte und einer Bodenplatte und beide vertikal verbindende Stützwände besteht, die auf einer Grundplatte lösbar mittels Schrauben befestigt ist.

Eine andere Ausgestaltung sieht vor, dass die Oszillations-Einrichtung zwischen zwei Stützwänden und unterhalb der Flanschplatte angeordnet ist.

Nach anderen Weiterbildungen ist die Oszillations-Einrichtung zusammen mit der Kolben-Zylinder-Einheit in senkrechter Stellung des Hydraulikzylinders und bei abgenommener ausbaufähiger Baugruppe herausnehmbar und umgekehrt wieder montierbar.

Sodann ist vorgesehen, dass auf den Trägerseitenplatten eine Stützplatte und über dieser eine Deckplatte befestigt ist, die die Führungsdorne für die Stranggleßkokille tragen. Dadurch kann ein wiederholbar genaues Einsetzen der Stranggießkokille- ohne erneutes Ausrichten und / oder Justieren erfolgen.

Eine andere Ausgestaltung sieht vor, dass die an der Kolbenstange befestigte Verlängerungsstange jeweils durch die Stützplatte hindurchgreifend mit der Stranggießkokille lösbar verbunden ist.

Die oben genannte Aufgabe der Erfindung wird weiterhin durch das beanspruchte Verfahren gelöst. Die Vorteile dieses Verfahrens entsprechen den oben mit Bezug auf die beanspruchte Vorrichtung genannten Vorteilen.

Dieses Verfahren kann dahingehend weiterentwickelt werden, dass nach der Demontage der Baugruppe aus paarweisen Lagerblöcken mit Führungselementen und einem mit den Lagerblöcken verbundenen Trägerkasten die Oszillations-Einrichtung in ihrer montierten und betriebsbereiten Funktionslage gehalten und die übrigen Wartungsarbeiten ohne Lösen eines hydraulischen Anschlusses durchgeführt werden. Die Trennung in Baugruppen Tragbauteile / Führungselemente und in eine Baugruppe Oszillations-Einrichtung gestattet eine jeweilige Demontage der Baugruppe Tragbauteile / Führungselemente, wobei dieser Verfahrensschritt ohne Öffnung des Hydraulikkreises der Oszillationseinrichtung durchgeführt wird. Ein wesentlicher Vorteil der separaten Baugruppen liegt in der Vermeidung einer Verunreinigung des Hydraulikkreises durch einen nicht notwendigen Wechsel der Oszillations-Einrichtung.

In der Zeichnung sind Ausführungsbeispiele der Erfindung dargestellt, die nachfolgend näher erläutert werden.

Es zeigen:
- Fig. 1: eine perspektivische Ansicht einer beidseitig zur Gießstrangöffnung in der Gießbühne angeordnete Tragkonstruktion,
- Fig. 2: dieselbe Ansicht wie Fig. 1 in senkrechter Vorderansicht,
- Fig. 3: eine perspektivische Darstellung der gemeinsam ausbaufähigen Baugruppe und
- Fig. 4: als Einzelheit die ortsfeste Tragkonstruktion bei Unterbaugruppe.

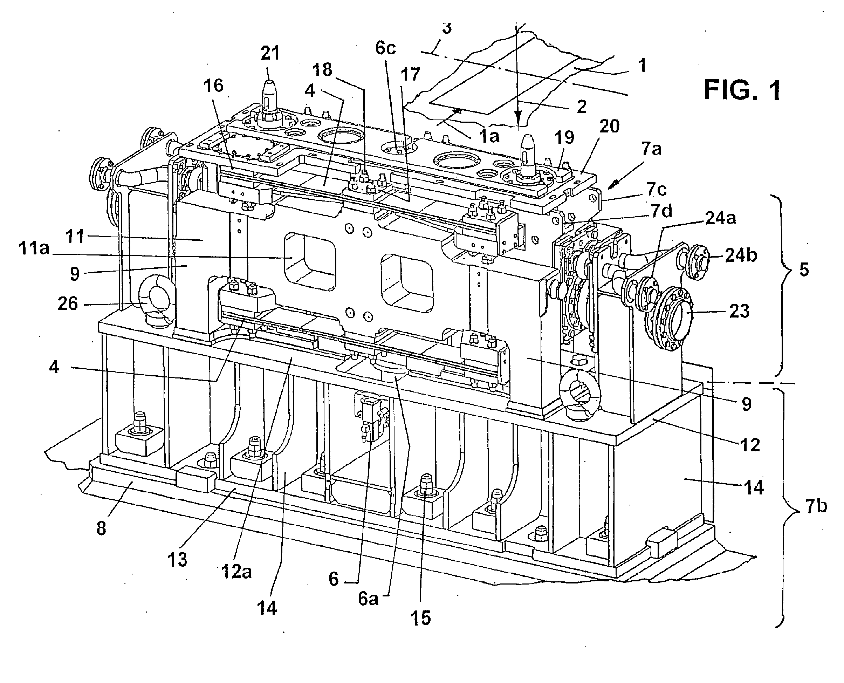

Die Vorrichtung für die Stützung und Oszillation einer Stranggießkokille 1 ist vorzugsweise für Brammenstränge aus flüssigen Stahlwerkstoffen vorgesehen und der Gießstrang wird in Richtung der Gießstrang-Mittellängsachse 2 abgezogen. Beidseitig zu der Symmetrie-Ebene 3 ist die in Fig. 1 dargestellte Baugruppe verwendet. Die weitgehend selbsttragende Stranggießkokille 1 wird mittels Führungselementen 4 gestützt und bewegt. Die Führungselemente 4 können aus Exzentern, Lenkhebeln, Federn jeglicher Art oder, wie gezeichnet, aus Blattfedern gebildet sein. Im Ausführungsbeipiel sind Blattfederpakete vorausgesetzt. Das Gewicht der Stranggießkokille 1 mit dem flüssigen Gießmaterial bzw. dem sich bildenden Gießstrang kann mittels ortsfesten Tragbauteilen 5 und Paaren von Oszillations-Einrichtungen 6 aufgenommen werden. Die Tragbauteile 5 bilden eine für sich gemeinsam ausbaufähige Baugruppe 7, die mittelbar mit einer auf der Gießbühne ortsfesten Grundplatte 8 lösbar verbunden ist. Die Tragbauteile 5 bzw. die Baugruppe 7 besitzen Lagerblöcke 9, an denen die Führungselemente 4 (hier die Blattfederpakete) befestigt sind. In der in Fig. 1 gezeichneten Ausführungsform sind die Führungselemente 4 mittels Klemmplatten 16 sowohl außen als auch in der Längenmitte 17 durch Schrauben 18 in Quadratecken befestigt. Dabei bilden die Lagerblöcke 9 jeweils einen Teil eines zusammenhängenden (einteiligen) Wandträgers 11, der auf einer Zwischenplatte 12 aufgestützt und befestigt ist. In dem Wandträger 11 sind Ausnehmungen 11a für den Zugang zu Organen der Kokillenkühlung oder der Kokillenbefestigung in Richtung der Kokillenseite 1a vorgesehen. Im Ausführungsbeispiel (Fig. 1) ist außerdem in dem Wandträger 11 ein Freiraum 12a für untere Führungselemente 4 vorhanden. Die Zwischenplatte 12 bildet zusammen mit einer Bodenplatte 13 und einer Vielzahl von horizontal beabstandeten Stützwänden 14 eine weitere Unterbaugruppe 7b.

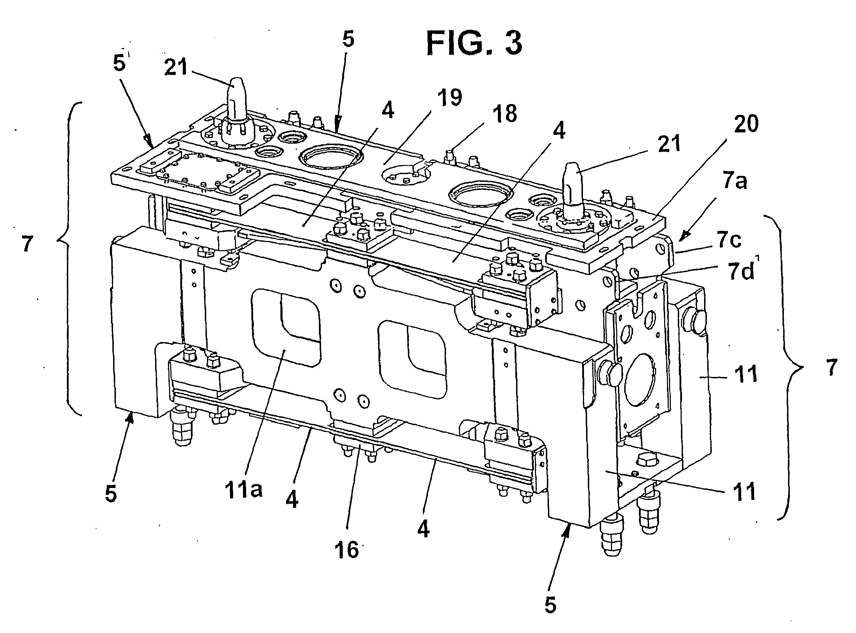

Somit ergibt sich eine Baugruppe 7 (Fig. 3) aus Lagerblöcken 9 bzw. einem Paar Wandträger 11, einer oder mehreren Klemmplatten 16, Führungselementen 4, wobei die Baugruppe 7 auf der Zwischenplatte 12 lösbar mittels Schrauben befestigt ist.

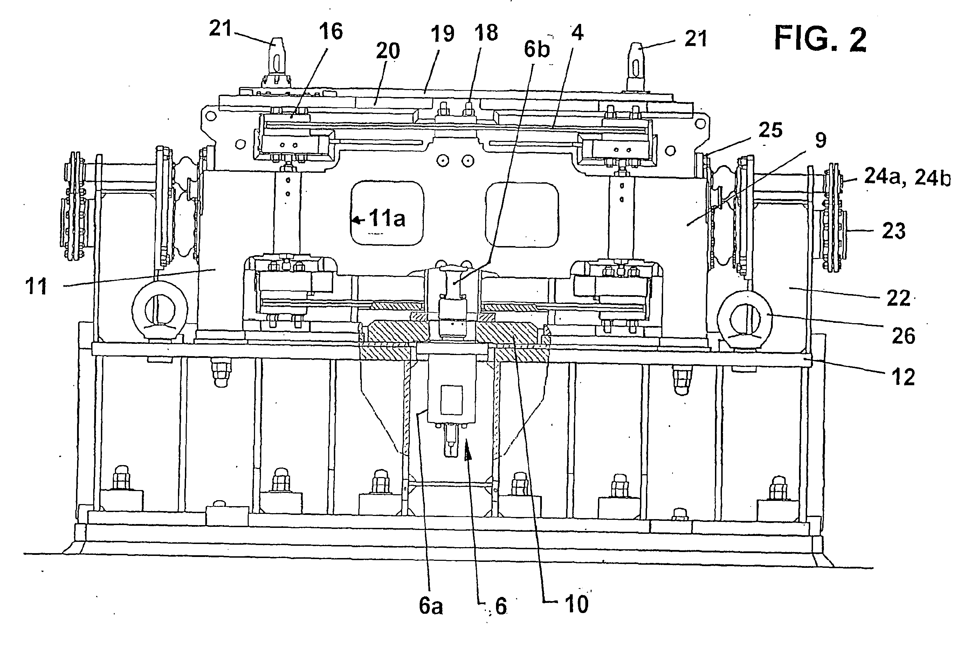

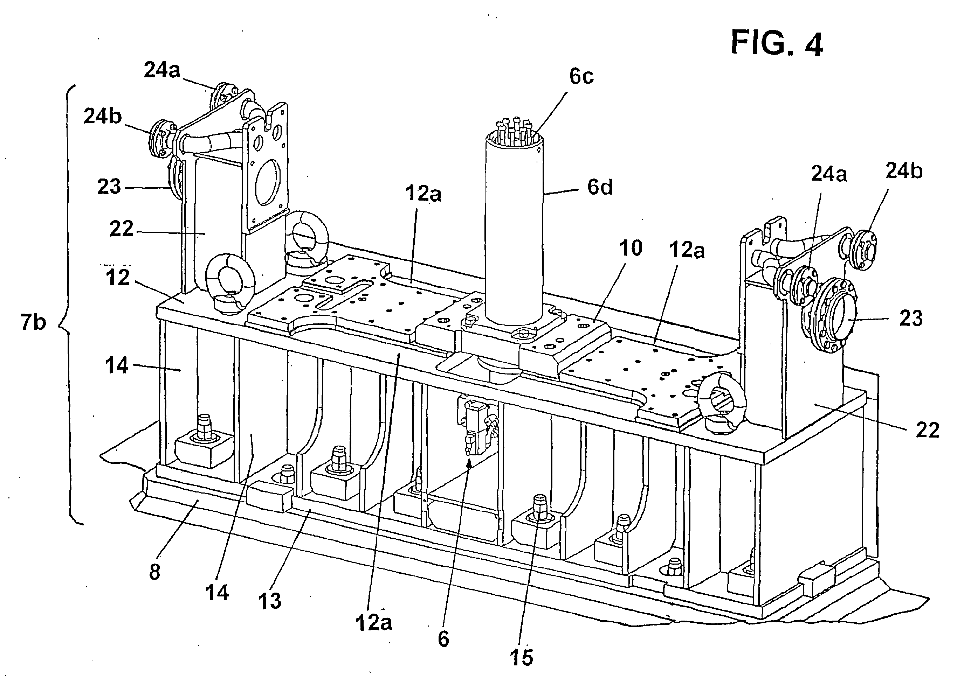

Die Oszillations-Einrichtung 6 ist geschützt innerhalb der ortsfesten Unterbaugruppe 7b angeordnet und an einen Hydraulikkreis angeschlossen. Die Oszillations-Einrichtung 6 ist zwischen zwei Stützwänden 14 im unteren Bereich an einer Flanschplatte 10 (Fig. 2) angeordnet. Die Kolben-Zylinder-Einheit 6a durchdringt die gesamte Baugruppe 7 (Fig. 3) und trägt an ihrer Kolbenstange 6b eine Verlängerungsstange 6c. Letztere ist von einem Schutzrohr 6d umgeben. Die Verlängerungsstange 6c ist (Fig. 4) mit dem Trägerkasten 7a lösbar verbunden. Dabei ist die Oszillations-Einrichtung 6 über die Flanschplatte 10 von der ortsfesten Unterbaugruppe 7b nach oben herausnehmbar, was jedoch in seltenen Fällen erforderlich wird.

Auf den Trägerseitenplatten 7c, 7d ist eine Stützplatte 20 und über dieser eine Deckplatte 19 befestigt, die Führungsdorne 21 für die Stranggießkokille 1 für einen wiederholbar genauen Einbau der Stranggießkokille 1 besitzt.

Die an der Kolbenstange 6b befestigte Verlängerungsstange 6c ist, jeweils durch die Stützplatte 20 hindurchgreifend über den Trägerkasten 7a mit der Stranggießkokille 1 verbunden.

Die Stranggießkokille 1 wird per Kran auf eine über einer Deckplatte 19 befindlichen Stützplatte 20 mit den Führungsdornen 21 aufgesetzt.

Ein Bestandteil der Tragbauteile 5 ist auch ein Aufbau 22 (Fig. 1, 2 und 4) für einen Kühlwasseranschluss 23 (Vorlauf) und für Kühlwasseranschlüsse 24a, 24b (Rücklauf) die zu einer Wasseranschlussplatte 25 geführt sind.

Die Tragbauteile 5 werden als Baugruppe 7 mittels des Krans ausgehoben beim Demontieren und eingesetzt beim Montieren.

Der Umfang der Baugruppe 7 kann in Grenzen von Fall zu Fall neu festgelegt werden, wenn nur der Umstand erfüllt ist, dass ein schnelles, leichtes, zeitsparendes Wechseln der Tragbauteile 5 und der Führungselemente 4 erfüllt ist, soweit diese durch Verschleiß gewartet oder gewechselt werden müssen.

Gemäß Fig. 4 ist die Unterbaugruppe 7b bei vollständig abgenommener Baugruppe 7 dargestellt. So sind u.a. die Führungselemente 4 und die Klemmplatten 16, die Schrauben 18, der einteilige Wandträger 11 mit den Lagerblöcken 9, die Deckplatte 19, die Stützplatte 20 mit den Führungsdornen 21 ausgebaut. Wie Fig. 4 weiter zeigt, kann nun auch ein einfacher Zugriff auf die Oszillations-Einrichtung 6 mit den Kolben-Zylinder-Einheiten 6a erfolgen. Die Kolben-Zylinder-Einheiten 6a können nach oben ausgebaut und umgekehrt wieder montiert werden.

In den Fig. 1 bis 4 ist somit ein Verfahren zum Montieren oder Demontieren einer Vorrichtung für die Oszillation einer Stranggießkokille 1 für flüssige Metalle, insbesondere für flüssige Stahlwerkstoffe, gezeigt und beschrieben, wobei in einem Demontageschritt jeweils zuerst eine für sich gemeinsam ausbaufähige Baugruppe 7 ausgebaut wird und danach - falls erforderlich - die jeweilige Oszillations-Einrichtung 6 nach oben herausgehoben werden kann, falls dies notwendig ist, und bei der Montage umgekehrt vorgegangen wird.

Dieses Verfahren zum Montieren, Demontieren oder Instanthalten einer Vorrichtung für die Oszillation einer Stranggießkokille 1 für flüssige Metalle, insbesondere für flüssige Stahlwerkstoffe, kann dahingehend ausgeübt werden, dass nach der Demontage der Baugruppe 7 aus paarweisen Lagerblöcken 9 mit Führungselementen 4 und einem mit den Lagerblöcken 9 verbundenen Trägerkasten 7a die Oszillations-Einrichtung 6 in ihrer montierten und betriebsbereiten Funktionslage gehalten wird und die übrigen Wartungsarbeiten ohne Lösen eines hydraulischen Anschlusses durchgeführt werden. Damit ist die sehr wichtige Bedingung erfüllt, dass eine Verschmutzung des Hydraulikkreises vermieden werden muss.

### Bezugszeichenliste

- 1: Stranggießkokille
- 1a: Kokillenseite
- 2: Gießstrang-Mittellängsachse
- 3: Symmetrie-Ebene
- 4: Führungselemente
- 5: Tragbauteile
- 6: Oszillations-Einrichtung
- 6a: Kolben-Zylinder-Einheit
- 6b: Kolbenstange
- 6c: Verlängerungsstange
- 6d: Schutzrohr
- 7: für sich gemeinsam ausbaufähige Baugruppe
- 7a: Trägerkasten
- 7b: Unterbaugruppe
- 7c: Trägerseitenplatte
- 7d: Trägerseitenplatte
- 8: Grundplatte
- 9: Lagerblöcke
- 10: Flanschplatte
- 11: einteiliger Wandträger
- 11a: Ausnehmung
- 12: Zwischenplatte
- 12a: Freiraum
- 13: Bodenplatte
- 14: Stützwand
- 15: Bodenschrauben
- 16: Klemmplatte
- 17: Längenmitte
- 18: Schrauben
- 19: Deckplatte
- 20: Stützplatte
- 21: Führungsdorn
- 22: Aufbau
- 23: Kühlwasseranschluss, Vorlauf
- 24a: Kühlwasseranschluss, Rücklauf
- 24b: Kühlwasseranschluss, Rücklauf
- 25: Wasseranschlussplatte
- 26: Transportösen

## Patentansprüche

1. Vorrichtung für die Stützung und Oszillation einer Stranggießkokille (1) zum Stranggießen von flüssigen Metallen, insbesondere von flüssigen Stahlwerkstoffen, mit
auf beidseitig zur Gießstrang-Mittellängsachse (2) symmetrisch angeordnete Baugruppe (7), umfassend paarweise Lagerblöcke (9) mit Führungselementen (4) und einen mit den Lagerblöcken (9) verbundenen Trägerkasten (7a) zum Stützen der Stranggießkokille;
einer ortsfesten Unterbaugruppe (7b), auf welcher die Baugruppe (7) aufgesetzt ist; und
einer Oszillations-Einrichtung (6) mit einer an einen Hydraulikkreis angeschlossenen hydraulischen Kalben-Zylinder-Einheit (6a) mit einer Kolbenstange (6b);
wobei die Baugruppe (7) lösbar mit der Unterbaugruppe (7b) verbunden ist; und
wobei die Oszillations-Einrichtung (6) innerhalb der ortsfesten Unterbaugruppe (7b) angeordnet ist;
**dadurch gekennzeichnet,**
**dass** die Kolbenstange (6b) mit einer von einem Schutzrohr (6d) umgebenen Verlängerungsstange (6c) versehen ist, die mit dem Trägerkasten (7a) lösbar verbunden ist; und
**dass** die Verlängerungsstange (6c), das Schutzrohr (d) und die Oszillations-Einrichtung mittels einer Flanschplatte (10) auf der ortsfesten Unterbaugruppe (7b) nach oben herausnehmbar befestigt ist.

2. Vorrichtung nach Anspruch 1,
**dadurch gekennzeichnet,**
**dass** die Lagerblöcke (9) jeweils aus einteiligen Wandträgem (11) bestehen, die mit dem Trägerkasten (7a) verbunden sind.

3. Vorrichtung nach den Ansprüchen 1 oder 2,
**dadurch gekennzeichnet,**
**dass** der Wandträger (11) Ausnehmungen (11a) für den Zugang zur Kokillenseite (1a) aufweist.

4. Vorrichtung nach den Ansprüchen 1, 2 oder 3,
**dadurch gekennzeichnet,**
**dass** die Unterbaugruppe (7b) aus einer Zwischenplatte (12) und einer Bodenplatte (13) und beide vertikal verbindende Stützwände (14) besteht, die auf einer Grundplatte (8) lösbar mittels Schrauben (15) befestigt ist.

5. Vorrichtung nach Anspruch 4,
**dadurch gekennzeichnet,**
**dass** die Oszillations-Einrichtung (6) zwischen zwei Stützwänden (14) und unterhalb der Flanschplatte (10) angeordnet ist.

6. Vorrichtung nach Anspruch 1,
**dadurch gekennzeichnet,**
**dass** auf den Trägerseitenplatten (7c, 7d) eine Stützplatte (20) und über dieser eine Deckplatte (19) befestigt ist, die die Führungsdorne (21) für die Stranggießkokille (1) tragen.

7. Vorrichtung nach den Ansprüchen 1 und 6,
**dadurch gekennzeichnet,**
**dass** die an der Kolbenstange (6b) befestigte Verlängerungsstange (6c) jeweils durch die Stützplatte (20) hindurchgreifend mit der Stranggießkokille (1) lösbar verbunden ist.

8. Verfahren zum Montieren oder Demontieren einer Vorrichtung nach Anspruch 1 zum Stützen und für die Oszillation einer Stranggießkokille (1) für flüssige Metalle, insbesondere für flüssige Stahlwerkstoffe, mit einer jeweils beidseitig zur Gießstrang-Mittellängsachse (2) symmetrisch angeordneten Baugruppe (7) zum Stützen der Stranggießkokille, einer ortsfesten Unterbaugruppe (7b), auf welcher die Baugruppe (7) lösbar aufgesetzt ist, und einer innerhalb der ortsfesten Unterbaugruppe (7b) angeordneten Oszillations-Einrichtung (6) mit einer an einen Hydraulikkreis angeschlossenen hydraulischen Kolben-Zylinder-Einheit (6a) mit einer Kolbenstange (6b);
umfassend die Schritte:
dass in einem Demontageschritt zuerst die Baugruppe (7) für sich ausgebaut wird, und danach, falls erforderlich, die Oszillations-Einrichtung zusammen mit einer Verlängerungsstange (6c) für die Kolbenstange und mit einem die Verlängerungsstange umgebenden Schutzrohr (6d) nach oben aus der Unterbaugruppe (7b) herausgehoben und bei einer Montage der Vorrichtung umgekehrt vorgegangen wird.

9. Verfahren nach Anspruch 8,
**dadurch gekennzeichnet, dass** - wenn nach der Demontage der Baugruppe (7) der Ausbau der Oszillations-Einrichtung nicht erforderlich sein sollte - die übrigen Wartungsarbeiten an der Vorrichtung ohne Lösen eines hydraulischen Anschlusses an der Vorrichtung ohne Lösen eines hydraulischen Anschlusses an der Oszillations-Einrichtung durchgeführt werden.

## Claims

1. Device for the support and oscillation of a continuous casting mould (1) for continuous casting of liquid metals, particularly of liquid steel materials, with assemblies (7) arranged symmetrically on either side with respect to the cast strip centre longitudinal axis (2) and comprising paired bearing blocks (9) with guide elements (4) and a support box (7a), which is connected with the bearing blocks (9), for supporting the continuous casting mould; a stationary subassembly (7b) on which the assembly (7) is placed; and oscillation equipment (6) with a hydraulic piston-cylinder unit (6a), which is connected with a hydraulic circuit, with a piston rod (6b); wherein the assembly (7) is detachably connected with the subassembly (7b); and wherein the oscillation equipment (6) is arranged within the stationary subassembly (7b); **characterised in that** the piston rod (6b) is provided with an extension rod (6c), which is surrounded by a protective tube (6d) and which is detachably connected with the support box (7a); and that the extension rod (6c), the protective tube (d) and the oscillation device is fastened by means of a flange plate (10) on the stationary subassembly (7b) to be withdrawable upwardly.

2. Device according to claim 1, **characterised in that** the bearing blocks (9) each consist of unitary wall members (11) which are connected with the support box (7a).

3. Device according to claim 1 or 2, **characterised in that** the wall member (11) has recesses (11a) for access to the mould side (1a).

4. Device according to claim 1, 2 or 3, **characterised in that** the subassembly (7b) consists of an intermediate plate (12) and a base plate (13) and two vertically connecting support walls (14), which subassembly is detachably fastened on a base plate (8) by means of screws (15).

5. Device according to claim 4, **characterised in that** the oscillation device (6) is arranged between two support walls (14) and below the flange plate (10).

6. Device according to claim 1, **characterised in that** a support plate (20) is fastened on the support side plates (7c, 7d) and a cover plate (19) is fastened above this, which cover plate carries the guide mandrels (21) for the continuous casting mould (1).

7. Device according to claims 1 and 6, **characterised in that** the extension rod (6c) fastened to the piston rod (6b) is detachably connected with the continuous casting mould (1) with in each instance passage through the support plate (20).

8. Method for mounting or demounting a device according to claim 1 for supporting and for oscillation of a continuous casting mould (1) for liquid metals, particularly for liquid steel materials, with a respective assembly (1), which is arranged symmetrically on either side with respect to the cast strip centre longitudinal axis (2), for supporting the continuous casting mould, a stationary subassembly (7b) on which the assembly (7) is detachably placed and oscillation equipment (6), which is arranged within the stationary subassembly (7b), with a hydraulic piston-cylinder unit (6a), which is connected with the hydraulic circuit, with a piston rod (6b); comprising the steps: that in a demounting step initially the assembly (7) in itself is demounted and thereafter, if required, the oscillation equipment, together with an extension rod (6c) for the piston rod and a protective tube (6d) surrounding the extension rod, is lifted upwardly out of the subassembly (7b) and the procedure is reversed for mounting the device.

9. Method according to claim 8, **characterised in that** - if after demounting of the assembly (7) demounting of the oscillation equipment should not be required - the remaining maintenance operations at the device are carried out without detaching a hydraulic connection to the device without detaching a hydraulic connection to the oscillation equipment.

## Revendications

1. Dispositif pour le support et l'oscillation d'une lingotière (1) de coulée continue pour la coulée continue de métaux liquides, en particulier de matériaux liquides de type acier, comprenant
des groupes (7) disposés symétriquement des deux côtés par rapport à l'axe longitudinal central (2) du brin coulé, comprenant, par paire, des blocs d'appui (9) avec des éléments de guidage (4) et une caisse support (7a) raccordée aux blocs d'appui (9) pour supporter la lingotière à coulée continue ;
un groupe inférieur fixe (7b) sur lequel est placé le groupe (7) ; et
un dispositif d'oscillation (6) présentant une unité (6a) à piston-cylindre hydraulique raccordée à un circuit hydraulique, présentant une tige (6b) de piston ;
le groupe (7) étant relié de manière amovible avec le groupe inférieur (7b) ; et
le dispositif d'oscillation (6) étant disposé dans le groupe inférieur fixe (7b) ;
**caractérisé en ce que** la tige (6b) de piston est pourvue d'une tige (6c) de prolongement entourée d'un tube de protection (6d), ladite tige étant reliée de manière amovible avec la caisse support (7a) ; et
**en ce que** la tige (6c) de prolongement, le tube de protection (d) et le dispositif d'oscillation sont fixés au moyen d'une plaque à bride (10) sur le groupe inférieur fixe (7b) de manière à pouvoir être enlevés vers le haut.

2. Dispositif selon la revendication 1, **caractérisé en ce que** les blocs d'appui (9) sont à chaque fois constitués par des supports de paroi (11) en une pièce, qui sont raccordés à la caisse support (7a).

3. Dispositif selon les revendications 1 ou 2, **caractérisé en ce que** les supports de paroi (11) présentent des évidements (11a) pour un accès au côté (1a) de la lingotière.

4. Dispositif selon les revendications 1, 2 ou 3, **caractérisé en ce que** le groupe inférieur (7b) est constitué par une plaque intermédiaire (12) et une plaque de fond (13) et des parois support (14) de liaison verticales qui les relient, et est fixé sur une plaque de fond (8) de manière amovible au moyen de vis (15).

5. Dispositif selon la revendication 4, **caractérisé en ce que** le dispositif d'oscillation (6) est disposé entre deux parois support (14) et sous la plaque à bride (10).

6. Dispositif selon la revendication 1, **caractérisé en ce qu'**on a fixé, sur les plaques support latérales (7c, 7d) une plaque d'appui (20) et sur celle-ci une plaque de recouvrement (19), qui porte les mandrins de guidage (21) pour la lingotière à coulée continue (1).

7. Dispositif selon les revendications 1 et 8, **caractérisé en ce que** la tige de prolongement (6c) fixées sur la tige (6b) de piston est à chaque fois reliée de manière amovible à la lingotière à coulée continue (1) en passant dans la plaque support (20).

8. Procédé pour le montage ou le démontage d'un dispositif selon la revendication 1 pour le support et l'oscillation d'une lingotière à coulée continue (1) pour métaux liquides, en particulier pour des matériaux liquides de type acier, présentant des groupes (7) disposés des deux côtés symétriquement par rapport à l'axe longitudinal central (2) du brin coulé pour le support de la lingotière à coulée continue, un groupe inférieur fixe (7b) sur lequel est disposé de manière amovible le groupe (7), et un dispositif d'oscillation (6) disposé dans le groupe inférieur fixe (7b) avec une unité (6a) à piston-cylindre hydraulique raccordée à un circuit hydraulique présentant une tige (6b) de piston ; comprenant les étapes
en ce que dans une étape de démontage, on démonte d'abord le groupe (7) en soi, puis, si nécessaire, on soulève le dispositif d'oscillation, avec une tige de prolongement (6c) pour la tige de piston et un tube de protection (6d) entourant la tige de prolongement, vers le haut hors du groupe inférieur (7b) et en ce qu'on procède inversement lors d'un montage du dispositif.

9. Procédé selon la revendication 8, **caractérisé en ce que** - lorsque le démontage du dispositif d'oscillation n'est pas nécessaire après le démontage du groupe (7) - les autres travaux d'entretien sur le dispositif sont réalisés sans défaire le raccord hydraulique sur le dispositif, sans défaire le raccord hydraulique sur le dispositif d'oscillation.
